# EUROPEAN PATENT SPECIFICATION

(11) **EP 0 405 697 B1**
(45) Date of publication and mention of the grant of the patent: **08.06.1994**
(21) Application number: 90201741.7
(22) Date of filing: 29.06.1990
(51) Int. Cl.: A22C 7/00

(54) **Apparatus for producing slices of meat from meat dough**
Vorrichtung zum Formen von Fleischscheiben aus Fleischteig
Appareil pour la formation de tranches de viande à partir de pâte de viande

(30) Priority: 30.06.1989 NL 8901672
(43) Date of publication of application: 02.01.1991
(73) Proprietor: van Schouwenburg, Gerrit A., NL-8101 CR Raalte (NL)
(72) Inventor: van Schouwenburg, Gerrit A., NL-8101 CR Raalte (NL)
(74) Representative: Smulders, Theodorus A.H.J., Ir.

(56) References cited:
- EP-A- 0 039 755
- DE-A- 1 632 096
- US-A- 2 572 833
- US-A- 2 575 068
- US-A- 2 694 222
- US-A- 3 203 037
- US-A- 3 599 560
- US-A- 3 722 034
- US-A- 3 924 296
- US-A- 4 229 859
- US-A- 4 460 611
- US-A- 4 516 291

## Description

This invention relates to an apparatus for producing slices of meat, ready for consumption, from a meat dough with a fine grain to which salt has been added to solubilize at least part of the meat proteins, comprising a dosing station, a moulding station and a heat treatment station comprising heat treatment means adapted to provide a heat treatment by which at least part of the solubilized proteins are coagulated and stabilize the slices formed.

European patent 0,164,372 discloses a process for producing slices of meat from meat which are ready for consumption. The meat dough is obtained by stripping pieces of meat from undesirable components, subsequently comminuting them, and adding salt. The salt is thoroughly admixed with the finely-ground meat and added in such a proportion as to partially solubilize the meat proteins. If desired, additives and/or flavours are added to the dough. The dough has a very fine grain, for example, less than 2 mm, so that the original structure of the pieces of meat from which the dough was made is lost.

From the dough, thin slices are formed, for example about 3 mm thick or less, which are stabilized by a thermal treatment. The thermal treatment comprises at least such a heat treatment that the solubilized proteins are coagulated to form a cross-linking lattice between the particles of the dough.

When the heat treatment is of short duration, a raw product is obtained, whereas prolonged heat treatment leads to a cooked product.

A great advantage of the process describe in European patent 0,164,372 is that high-quality meat products can be made from pieces of meat which, owing to their size and/or their undesirable constituents are unsuitable for being directly cut up into meat products which are ready for consumption.

It is an object to the present invention to provide apparatus by means of which the process described in European patent 0,164,372 can be practised in a suitable manner, and which is generally suitable for producing slices of meat product, ready for consumption, from meat dough.

It is observed that US-A-3599560 which discloses the preamble of claim 1, discloses an apparatus of the above type for producing ribbons of a cooked sausage-type meat product from a meat emulsion. The meat emulsion is deposited in forming zones provided in the surface of a roller and the meat emulsion is pressed into the forming zones by means of an electrically conductive belt. In use an electrical current is passing through the conductive belt, the roller and the meat emulsion in the forming zones whereby the meat emulsion is coagulated. The thus formed ribbons are then separated from the roller and transferred to an oven.

The use of an electric current for coagulation produces uncertain results because the electrical resistance of a meat emulsion will vary from spot to spot. Also the use of an electrically conductive belt is rather awkward.

It is an object of the present invention to provide an improved apparatus for producing slices of meat product. For this purpose an apparatus of the type described above is characterized in that said stations are interconnected by a belt conveyor device for transporting portions of meat dough provided at the dosing station to the moulding station and the heat treatment station, wherein the moulding station comprises a first conveyor belt capable of being pressed onto a portion of meat dough lying on the belt device to thereby mould the portion of meat dough between the first conveyor belt and the belt conveyor device into a thin non-coherent slice, said heat-treatment station comprising a second conveyor belt mounted above the belt conveyor device interconnecting the stations, as well as heat-treatment means mounted at the backs of said second conveyor belt and the belt of the belt conveyor device. In an alternative embodiment, disclosed in claim 4, the first and second conveyor belts are combined as a single conveyor belt.

Reference is further made to US-A-4,299,859 disclosing a process and apparatus for making disk-shaped meat patties with a home-made appearance. According to US-A-4,229,859 ground meat is formed to cylindrical masses which are placed on a conveyor. Above the conveyor belt two piston presses have been provided which flatten the meat patties to still rather thick disk-shaped patties, which then may be frozen or packaged. The use of meat dough with a fine grain is not suggested, nor are thin meat slices which are ready for consumption provided by this known process. Also the known apparatus does not include a heat treatment station for coagulating solubilized proteins and stabilizing the moulded meat dough.

One embodiment of the apparatus according to the invention will be described, by way of example, with reference to the accompanying drawings, in which
Fig. 1 shows diagrammatically, and in side-elevational view, one embodiment of an apparatus according to the present invention;
Fig. 2 illustrates schematically a method of forming slices from meat dough using a mould.

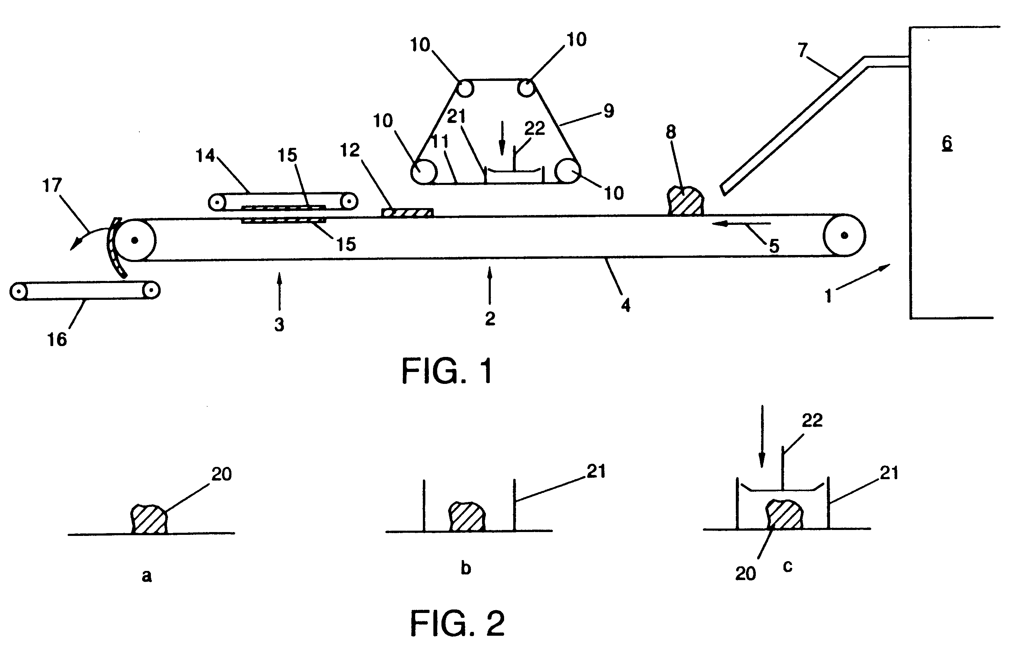

Fig. 1 shows diagrammatically, and in side-elevational view, one embodiment of an apparatus according to this invention by way of example. The apparatus shown comprises a dosing station 1, a moulding station 2, and a thermal-treatment station 3. In the example shown, stations 1-3 are interconnected by a single conveyor belt 4. In operation, the conveyor belt moves in the direction indicated by an arrow 5.

It is observed that the stations may be interconnected in a different way, for example, by using different kinds of conveyor devices, or by using a plurality of conveyor devices which link up with each other, and may or may not be in alignment with each other. It is also possible for two or more stations to be integrated into one single station.

The dosing station 1 comprises a supply container 6 for the meat dough, which has been prepared, for example, in the manner described in European patent 0,164,372, and then contains partially solubilised proteins. The supply container is provided with a suitable known dosing device, not shown in any detail herein, such as a dosing pump or a dosing piston, which through a suitable nozzle can deposit a lump 8 of meat dough with a pre-determined weight or volume on conveyor belt 4. As shown, the nozzle may have the form of a spout, or be formed otherwise.

In operation, the lump of meat dough is transported in the direction of arrow 5 to the moulding station, where it is moulded into a slice. Such a slice may be formed by rolling the lump 8 to a flat condition by means of one or more compression rollers or belts or other suitable means in one or more steps. The slices thus obtained are of somewhat irregular shape. The ultimate form partly depends on the shape and orientation of the lump 8 on belt 4, and will generally differ somewhat from slice to slice. In this way slices can be obtained which have the same appearance as slices normally cut from a piece of meat.

If desired, a lump of meat dough may be rolled, spread or otherwise flattened in more than one direction.

Furthermore, if desired, the lump may be given a specific circumferential shape by using a nozzle having a corresponding cross-sectional configuration at least at its end.

As the lump 8 is being rolled out, a desired surface structure may be applied by providing the roller(s) or belt(s) with an embossed pattern. Conveyor belt 4 should then be provided with a similar embossed pattern.

A different method of forming thin slices from lumps of meat dough is illustrated in Fig. 2. Fig. 2 shows a lump of meat dough 20 placed on a substrate. In Fig. 2b, the lump is located within a moulding ring 21, and Fig. 2c shows a piston 22, which flattens the lump within the moulding ring into a slice having the circumferential configuration of the moulding ring. The substrate may again be the belt 4 of Fig. 1. Preferably, lump 20 is situated between two belts, and thereafter the moulding ring is placed around the lump, and piston 22 applied.

In this manner, which is shown schematically in Fig. 1, direct contact between the meat dough and the moulding ring and the piston is prevented, and the meat dough cannot stick to the moulding ring and/or piston.

The moulding station 2 shown diagrammatically in Fig.1 comprises a flexible endless belt 9 disposed above conveyor belt 4 and trained over suitable reversing rollers 10. A run 11 of belt 9 facing conveyor belt 4 is spaced a short distance above belt 4, and moves in synchronism with it in the same direction. At the back of run 11, there is provided a reciprocating sub-assembly of a moulding ring 21 and a piston 22, which press belt 9 into contact with belt 4 each time when a lump of meat dough passes. The lump thus comes to lie between the two belts within moulding ring 21 and is subsequently flattened into a slice having the circumferential configuration of the moulding ring by piston 22, which makes a slightly larger stroke than the moulding ring.

If desired, the sub-assembly of moulding ring and piston may be mounted in such a manner that it is capable of moving along with belts 9 and 4 some distance.

As belt 4 has a pre-determined velocity, it can be determined in a simple manner, for example, by means of a light barrier at the position of nozzle 7, when a lump 8 is at the level of the sub-assembly of moulding ring and piston.

A slice thus formed is shown diagrammatically at 12.

Still another method of forming slices is extruding the meat dough from one or more nozzles, either continuously or intermittently, on to belt 4 in one or more thin ribbon-like slabs. The ribbon-like slabs can then later be cut up into slices of the desired dimensions, preferably after the thermal treatment station .This method of production is suitable, for example, for cooked ham, which is often sold in rectangular slices.

It is noted that, in principle, slices of the desired dimensions may be extruded directly.

The slices formed in any of the above manners or otherwise, are passed through a thermal-treatment station 3, preferably while they are still on the same conveyor belt 4, where the slices are heated and the meat dough is given coherence by reason of the previously solubilised proteins being at least partially coagulated under the influence of the thermal treatment to form a cross-linking network.

As shown, the thermal treatment is effected while the slices are situated between two belts. For this purpose, in the example shown in Fig. 1, an endless belt 14 is provided above conveyor belt 4. At the back of both belts 4 and 14, elements 15 are provided, by means of which the slices are heated to a temperature ranging, for example, from 50° to 120°C, but preferably between 55° and 75°C.

The thermal treatment may be effected by contact heating, as indicated above, but alternatively by (infrared) radiation, or high-frequency radio waves or microwaves. In the first two cases, the slices are heated indirectly through the belts, and in the latter two cases the waves act directly on the meat proper.

If a belt 9 is used for forming the slices, as shown in Fig.1, the belts 9 and 14 may advantageously be one and the same belt.

By means of the belts, a desired embossed pattern may be formed in the slices. The embossed pattern is preferably adapted to the nature of the desired final product.

After the thermal treatment, the slices may be processed further, for example, cut and/or packaged. Also, a further thermal treatment is possible, for example, boiling, broiling, smoking or drying.

For the further treatment, the slices are transferred one by one to another conveyor belt 16, as shown diagrammatically with an arrow 17.

In the manner described, reconstituted slices may be produced which have the appearance of, for example, sausage-like products, such as slices of luncheon meat or dry sausage. Also, reconstituted slices with the appearance (and the taste) of ham, roastbeef, smoked beef, bacon and the like can be made. The slices may be very thin, for example, 0.2 to 0.3 mm, but alternatively may be of a larger thickness of, for example, 5 mm.

In the case of thicker slices, the meat dough may contain larger particles.

It is possible for the slices to be first subjected to a heat treatment and then be cooled. For this purpose, both heating elements and refrigerating and/freezing elements may be provided in the thermal-treatment station.

As observed before, it is possible for stations to be integrated. Thus the thermal treatment could be carried out by means of the piston 22 of the moulding station. The moulding station and thermal-treatment station are then at least partially integrated. If (loose) slices are extruded directly, the dosing station and the moulding station are at least partially integrated.

One of the great advantages of the apparatus described is that the production of the slices of meat ready for consumption can take place fully automatically. Accordingly, the apparatus described may be supplemented with a station for stacking a plurality of slices, and packing the stacks formed into a package, or supplying them to a packaging machine.

Automatically packaging the slices can be effected in a relatively simple manner, because the slices are moving through the apparatus in a pre-determined position.

It is observed that, after reading the above, various modifications will readily occur to those skilled in the art. Such modifications are considered to fall within the scope of the present invention, as defined in the claims.

## Claims

1. Apparatus for producing slices of meat, ready for consumption, from a meat dough with a fine grain to which salt has been added to solubilize at least part of the meat proteins, comprising a dosing station (1), a moulding station (2) and a heat treatment station (3) comprising heat treatment means (15) adapted to provide a heat treatment by which at least part of the solubilized proteins are coagulated and stabilize the slices formed, characterized in that said stations are interconnected by a belt conveyor device (4) for transporting portions of meat dough (8) provided at the dosing station (1) to the moulding station (2) and the heat treatment station (3), wherein the moulding station (2) comprises a first conveyor belt (9) capable of being pressed onto a portion of meat dough (8) lying on the belt conveyor device (4) to thereby mould the portion of meat dough (8) between the first conveyor belt (9) and the belt conveyor device (4) into a thin non-coherent slice, said heat-treatment station comprising a second conveyor belt (14) mounted above the belt conveyor device (4) interconnecting the stations, as well as heat-treatment means (15) mounted at the backs of said second conveyor belt (14) and the belt of the belt conveyor device (4).

2. Apparatus as claimed in claim 1, characterized in that at least one of the conveyor belts (9,14) or the belt conveyor device (4) is provided with an embossed pattern.

3. Apparatus as claimed in claims 1 or 2, characterized in that the heat-treatment station (3) is arranged to heat the slices of meat passing the heat-treatment station (3) to a temperature in the range of at least 55°C-75°C.

4. Apparatus as claimed in any one of the preceding claims, characterized in that the first conveyor belt (9) of the moulding station (2) and the second conveyor belt (14) of the heat-treatment station (3) are combined to a single conveyor belt provided above the conveyor device (4) interconnecting the stations.

5. Apparatus as claimed in any one of the preceding claims, characterized by a cutting device for cutting the stabilized slices leaving the heat-treatment station.

6. Apparatus as claimed in any one of claims 1-4, characterized by a moulding ring (21) which together with a piston (22) movable in said moulding ring is provided at the rear side of the conveyor belt (9) and is adapted to be pressed against the rear surface of the conveyor belt (9) to hereby mould the portion of meat dough (8) between the conveyor belt (9) and the belt conveyor device (4) into a thin non-coherent slice having a circumferential configuration defined by the moulding ring (21).

7. Apparatus as claimed in claim 6, characterized in that the piston (22) is provided with means for providing a heat-treatment during moulding of the meat dough.

## Patentansprüche

1. Vorrichtung zur Herstellung von Scheiben gebrauchsfertigem Fleisch aus feinkörnigem Fleischteig, dem Salz zugesetzt ist, um die Fleischeiweiße mindestens zum Teil löslich zu machen, versehen mit einer Dosierstation (1), einer Formstation (2) und einer Wärmebehandlungsstation (3) mit Wärmebehandlungsmitteln (15) zur Durchführung einer Wärmebehandlung, wodurch die löslich gemachten Eiweiße mindestens zum Teil koaguliert werden und die gebildeten Scheiben stabilisieren, dadurch gekennzeichnet, daß die genannten Stationen miteinander verbunden sind durch einen Bandförderer (4) zum Transportieren der an der Dosierstation (1) aufgegebenen Portionen Fleischteig (8) zur Formstation (2) und zur Wärmebehandlungsstation (3), wobei die Formstation (2) ein erstes Förderband (9) aufweist, das auf eine auf dem Bandförderer (4) liegende Portion Fleischteig (8) gedruckt werden kann, um die Portion Fleischteig (8) zwischen dem ersten Förderband (9) und dem Bandförderer (4) zu einer dünnen nicht-zusammenhängenden Scheibe zu formen, wobei die Wärmebehandlungsstation (3) ein zweites Förderband (14) aufweist, das oberhalb des die Stationen miteinander verbindenden Bandförderers (4) angeordnet ist, sowie Wärmebehandlungsmittel (15), die an den Rückseiten des zweiten Förderbandes (14) und des Bandes des Bandförderers (4) angeordnet sind.

2. Vorrichtung nach Anspruch 1, dadurch gekennzeichnet, daß mindestens eines der Förderbänder (9, 14) oder der Bandförderer (4) mit einem Reliefmuster versehen ist.

3. Vorrichtung nach Anspruch 1 oder 2, dadurch gekennzeichnet, daß die Wärmebehandlungsstation (3) eingerichtet ist, die die Wärmebehandlungsstation (3) passierenden Fleischscheiben auf einer Temperatur zwischen mindestens 55°C und 75°C zu erhitzen.

4. Vorrichtung nach einem der vorhergehenden Ansprüche, dadurch gekennzeichnet, daß das erste Förderband (9) der Formstation (2) und das zweite Förderband (14) der Wärmebehandlungsstation (3) zu einem einzigen Förderband kombiniert sind, das oberhalb des die Stationen miteinander verbindenden Bandförderers (4) angeordnet ist.

5. Vorrichtung nach einem der vorhergehenden Ansprüche, gekennzeichnet durch eine Schneidvorrichtung zum Schneiden der die Wärmebehandlungsstation verlassenden stabilisierten Scheiben.

6. Vorrichtung nach einem der Ansprüche 1 bis 4, gekennzeichnet durch einen Formring (21), der zusammen mit einem im Formring beweglichen Kolben (22) an der Rückseite des Förderbandes (9) vorgesehen ist und gegen die Rückseite des Förderbandes (9) gedrückt werden kann, um dadurch die Portion Fleischteig (8) zwischen dem Förderband (9) und dem Bandförderer (4) zu einer dünnen nicht-zusammenhängenden Scheibe zu formen, die eine durch den Formring (21) bestimmte Umfangsform aufweist.

7. Vorrichtung nach Anspruch 6, dadurch gekennzeichnet, daß der Kolben (22) mit Mitteln zur Durchführung einer Wärmebehandlung während des Formens des Fleischteiges versehen ist.

## Revendications

1. Appareil pour la production de tranches de viande prêtes à la consommation à partir d'un pâté de viande à grain fin, auquel on a ajouté du sel en vue de solubiliser au moins une partie des protéines de viande, comportant un poste de dosage (1), un poste de moulage (2) et un poste de traitement thermique (3) comportant des moyens de traitement thermique (15) adaptés pour fournir un traitement thermique par lequel au moins une partie des protéines mises en solution est coagulée et stabilise les tranches formées, caractérisé en ce que ces postes sont reliés par un dispositif (4) à bande transporteuse pour transporter vers le poste de moulage (2) et le poste de traitement thermique (3) des portions de pâté de viande (8) fournies au poste de dosage (1), le poste de moulage (2) comportant une première bande transporteuse (9) pouvant être comprimée contre une portion de pâté de viande (8) posée sur le dispositif (4) à bande transporteuse, pour ainsi mouler la portion de pâté de viande (8), entre la première bande transporteuse (9) et le dispositif (4) à bande transporteuse, en une fine tranche non cohérente, ledit poste de traitement thermique comportant une seconde bande transporteuse (14) montée au-dessus du dispositif (4) à bande transporteuse reliant les postes, ainsi que des moyens de traitement thermique (15) montés au dos de ladite seconde bande transporteuse (14) et de la bande du dispositif (4) à bande transporteuse.

2. Appareil selon la revendication 1, caractérisé en ce qu'au moins une des bandes transporteuses (9, 14) ou le dispositif (4) à bande transporteuse sont dotés d'un motif en relief.

3. Appareil selon les revendications 1 ou 2, caractérisé en ce que le poste de traitement thermique (3) est agencé pour chauffer les tranches de viande passant dans le poste de traitement thermique (3), à une température située dans la plage d'au moins 55°C - 75°C.

4. Appareil selon l'une quelconque des revendications précédentes, caractérisé en ce que la première bande transporteuse (9) du poste de moulage (2) et la seconde bande transporteuse (14) du poste de traitement thermique (3) sont combinées en une seule bande transporteuse prévue au-dessus du dispositif (4) à bande transporteuse reliant les postes.

5. Appareil selon l'une quelconque des revendications précédentes, caractérisé par un dispositif de coupe pour couper les tranches stabilisées quittant le poste de traitement thermique.

6. Appareil selon l'une quelconque des revendications 1-4, caractérisé en ce qu'un anneau de moulage (21) est prévu en même temps qu'un piston (22) mobile dans ledit anneau de moulage du côté arrière de la bande transporteuse (9), et est adapté pour être repoussé contre la surface arrière de la bande transporteuse (9), pour ainsi mouler la portion de pâté de viande (8) entre la bande transporteuse (9) et le dispositif (4) à bande transporteuse, en une fine tranche non cohérente présentant une forme circulaire définie par l'anneau de moulage (21).

7. Appareil selon la revendication 6, caractérisé en ce que le piston (22) est doté de moyens en vue de fournir un traitement thermique pendant le moulage du pâté de viande.
